# EUROPÄISCHE PATENTSCHRIFT

(11) **EP 3 010 651 B1**
(45) Veröffentlichungstag und Bekanntmachung des Hinweises auf die Patenterteilung: **17.02.2021**
(21) Anmeldenummer: 14726586.2
(22) Anmeldetag: 26.05.2014
(51) Int. Cl.: B06B 1/06, G01S 7/521, G01S 15/931

(54) **UMFELDSENSIEREINRICHTUNG MIT MODULAREM ULTRASCHALLWANDLER, UND KRAFTFAHRZEUG MIT EINER DERARTIGEN UMFELDSENSIEREINRICHTUNG**
SURROUNDINGS-SENSING SYSTEM HAVING A MODULAR ULTRASONIC TRANSDUCER, AND A MOTOR VEHICLE HAVING SUCH A SURROUNDINGS-SENSING SYSTEM
DISPOSITIF DE DÉTECTION D'ENVIRONNEMENT COMPRENANT UN TRANSDUCTEUR ULTRASONORE MODULAIRE ET VÉHICULE AUTOMOBILE ÉQUIPÉ D'UN DISPOSITIF DE DÉTECTION D'ENVIRONNEMENT DE CE TYPE

(30) Priorität: 20.06.2013 DE 102013211593
(43) Veröffentlichungstag der Anmeldung: 27.04.2016
(73) Patentinhaber: Robert Bosch GmbH, 70442 Stuttgart (DE)
(72) Erfinder: BARTYLLA, David, 71229 Leonberg (DE); TREPTOW, Thomas, 71229 Leonberg (DE)
(86) Internationale Anmeldenummer: PCT/EP2014/060771
(87) Internationale Veröffentlichungsnummer: WO 2014/202337

(56) Entgegenhaltungen:
- EP-A1- 1 878 624
- WO-A1-2011/090484
- DE-A1-102010 063 001
- DE-U1-202012 010 508
- DE-U1-202012 010 508

## Beschreibung

### Stand der Technik

Die Erfindung betrifft eine Umfeldsensiereinrichtung zur ultraschallbasierten Umfeldsensierung unter Einsatz eines Schallwandlers, wie sie unter anderem im Zusammenhang mit Kraftfahrzeugen sowie bewegten oder stehenden Maschinen (beispielsweise Roboter, Landmaschinen oder Baumaschinen) zum Einsatz kommt, so zum Beispiel als klassische Anwendung als Umfelderfassungshilfsmittel für ein entsprechendes Einparkassistenzsystem, unter anderem zur Messung von Abständen zu bestimmten Gegenständen. Die Erfindung betrifft zudem ein Kraftfahrzeug, bei dem zumindest eine derartige Umfeldsensiereinrichtung an einem Stoßfänger, einem Seitenspiegel oder einem Türabschnitt des Kraftfahrzeugs angeordnet ist.

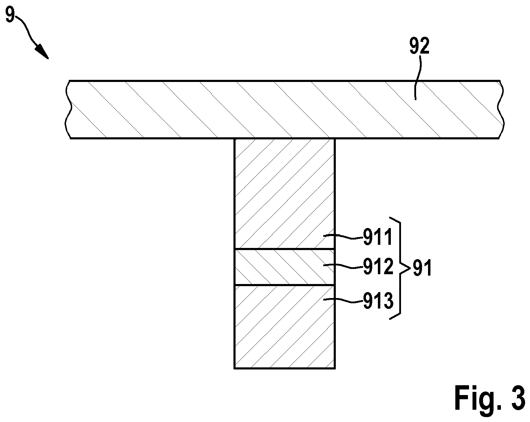

In letzter Zeit werden bei Kraftfahrzeugen auf diesem technischen Gebiet in der Regel Umfeldsensoren auf Ultraschallbasis verwendet, bei denen häufig piezobasierte Schallwandler zum Einsatz kommen. Dabei werden üblicherweise Ultraschallsignale durch ein Medium wie Luft oder Wasser von einem Emitter zu einem Empfänger übermittelt oder von einem Emitter in eine Umgebung übermittelt oder von einem in der Umgebung befindlichen Objekt reflektierte Ultraschallsignale erfasst und die Laufzeit und/oder Laufzeitdifferenzen und/oder weitere Größen wie beispielsweise Amplituden und Phasen der Ultraschallsignale gemessen. Um ausreichende Sendestärken und hohe Empfangsempfindlichkeiten zu erzielen, handelt es sich bei diesen Schallwandlern überwiegend um resonante Schwinger, die aus Festkörpern und einem oder mehreren Piezoelementen bestehen. Als ein generelles Beispiel für einen derartigen resonanten Schwinger sind unter anderem als Dickenschwinger bezeichnete piezobasierte Ultraschallwandler als Stand der Technik bekannt. Ein prinzipieller Aufbau einer bekannten Umfeldsensiereinrichtung ist in Figur 3 gezeigt, wobei der Dickenschwinger 91 der Umfeldsensiereinrichtung 9 an einer Resonanzfläche 92 angeordnet ist und ein flaches Piezoelement 912 als Ultraschallwandlerelement aufweist, das in einem Resonanzkörper eingebettet ist, das heißt zwischen einem Vorderkörper 911 des Resonanzkörpers und einem Rückkörper 913 des Resonanzkörpers angeordnet und mit diesen fest verbunden ist, üblicherweise durch eine Klebeverbindung oder dergleichen. Ferner ist der Vorderkörper 911 mit der Innenseite der Resonanzfläche 92 ebenfalls fest verbunden, üblicherweise durch eine Klebeverbindung.

Aus optischen Gründen wurden die Umfeldsensoren immer kleiner und immer mehr versteckt verbaut, so zum Beispiel in einem Stoßfänger eines Kraftfahrzeugs, so dass ab einer bestimmten Baugröße nur noch die Sensorfront zu sehen ist. Ein spezifisches Beispiel für einen Ultraschallsensor für ein Kraftfahrzeug kann der DE 10 2007 046 031 A1 entnommen werden. Der darin beschriebene Ultraschallsensor ist mit einer akustischen Abstimmschicht ausgebildet, die an ein Schwingungselement gekoppelt ist. Das Schwingungselement erzeugt Ultraschallwellen, die in die Umgebung des Kraftfahrzeugs abgegeben werden, und die akustische Abstimmschicht wird durch rückgeworfene Ultraschallwellen deformiert, so dass das piezoelektrische Schwingungselement durch die Deformation in Resonanz versetzt wird. Der Ultraschallsensor ist hier in einem Loch in dem Stoßfänger verklebt, wobei eine Empfangsoberfläche des Ultraschallwandlers zur Umgebung des Kraftfahrzeugs hin freiliegt.

Im Zuge einer weiteren optischen Verbesserung der bekannten Ultraschallsensoren sollen diese mittlerweile hinter dem Stoßfänger angebracht werden, so dass sie optisch nicht mehr sichtbar sind. Als Beispiel eines derartigen Aufbaus kann zum Vergleich in Figur 3 angenommen werden, dass die Resonanzfläche 92 eine Außenhaut des Stoßfängers darstellt, wobei der Dickenschwinger 91 mit der Innenseite der Außenhaut 92 verklebt ist. Ein Nachteil dieser Art der aus dem Stand der Technik bereits bekannten Ultraschallwandler ist jedoch unter anderem, dass diese aufgrund ihrer festen Verbindung mit dem Stoßfänger beziehungsweise mit der entsprechenden Resonanzfläche nicht zerstörungsfrei demontierbar sind, so dass defekte Sensoren nicht ohne übermäßigen Aufwand ausgetauscht werden können.

Das Dokument WO 2011/090484 A1 beschreibt einen elektroakustischen Wandler, der als λ/2 Schwinger ausgebildet sein kann. Ein vor- und rückseitig mit Elektroden kontaktiertes Piezoelement weist hierbei einen Vorkörper und einen Rückkörper zur Übertragung der Schwingungen auf, wobei der Vorkörper über ein Kopplungselement mit einem dünnen Material verbunden ist. Als Halterung des Vorderkörpers an der Membran kann ein Gehäusedeckel an der Rückseite des Wandlers verwendet werden. Das Dokument DE 20 2012 010508 offenbart eine Umfeldsensiereinrichtung zum Senden und/oder Empfangen von Ultraschallsignalen, mit einem Ultraschallwandler.

### Offenbarung der Erfindung

Eine Umfeldsensiereinrichtung gemäß der vorliegenden Erfindung, die eine Lösung für die vorhergehend diskutierten Probleme bietet, umfasst zumindest einen Ultraschallwandler und eine Membran zur Schallübertragung nach Anspruch 1. Der Ultraschallwandler weist dabei zumindest ein Wandlerelement und zumindest einen Resonanzkörper mit einem Vorderkörper und einem Rückkörper auf. Die Membran ist mit einer Stirnseite des Vorderkörpers gekoppelt, wobei der Vorderkörper, das Wandlerelement und der Rückkörper trennbar miteinander verbunden sind, und wobei der Vorderkörper an der Membran befestigt ist. Eine Befestigung des Vorderkörpers an der Membran erfolgt dabei vorzugsweise durch eine Verklebung, Verschweißung, Verschmelzung oder Verspannung des Vorderkörpers an der Membran, genauer gesagt an der Innenseite der Membran. Der Vorderkörper kann eine durchgehende, stabartige Form aufweisen, er kann aber auch alternativ dazu so ausgebildet sein, dass er an der mit der Membran verbundenen Stirnseite des Vorderkörpers eine Plattenform aufweist, konisch zuläuft oder beliebig geformt ist. Für den Vorderkörper und den Rückkörper beziehungsweise den Resonanzkörper, sowie das Wandlerelement kann prinzipiell jede Geometrie gewählt werden. Vorzugsweise entspricht der Querschnitt dieser Bauteile einer entsprechend ausgewählten geometrischen Form, so zum Beispiel einer Kreisform, einer Ellipsenform, einer ovalen Form, insbesondere mit unterschiedlichen Achslängen für unterschiedliche Richtcharakteristiken in horizontaler und/oder vertikaler Richtung, einer Rechteckform, insbesondere einer Quadratform oder der Form eines Rechtecks mit abgerundeten Ecken, insbesondere mit unterschiedlichen Abmessungen für unterschiedliche Richtcharakteristiken in horizontaler und/oder vertikaler Richtung, oder einer Kombination aus den vorhergehend genannten geometrischen Formen. Der Durchmesser der Bauteile des Ultraschallwandlers können beliebig gewählt werden, wobei der Durchmesser der einzelnen Bauteile, insbesondere des Vorderkörpers, des Wandlerelements und des Rückkörpers bevorzugt in Beziehung zueinander so gewählt ist, dass die Durchmesser vorzugsweise gleich groß sind, beziehungsweise so, dass der Vorderkörper einen kleineren Durchmesser als der Rückkörper aufweisen kann.

Der Vorderkörper und/oder der Rückkörper des Resonanzkörpers, auch Schwingkörper genannt, können dabei aus unterschiedlichen Materialien gefertigt sein, so zum Beispiel aus Metall, Keramik oder Kunststoff (z.B. Polymere) oder einer Kombination aus diesen. Die vom Wandlerelement zur Umfeldsensierung ausgesendete akustische Welle verlässt die Umfeldsensieranordnung bevorzugt in Richtung der Stirnseite des Vorderkörpers, auch als Vordermasse bezeichnet, wobei rückwärtige Strahlung im besten Fall vollständig unterdrückt wird. Dazu dient der Rückkörper, auch als Rückmasse bezeichnet, zur Dämpfung der Schwingung gegenüber dem Bereich, in welchem keine Abstrahlung gewünscht ist.

Der Begriff des Wandlerelements ist weit zu fassen und umfasst beispielsweise elektrischakustische Wandler, welche nach elektrostatischen, magnetostriktiven, piezoelektrischen Effekten oder Kombinationen dieser Effekte arbeiten. Im Rahmen der Erfindung kann das Wandlerelement eine Piezokeramik, ein Elektret, wie zum Beispiel Polyvinylidenfluorid (PVDF), oder ein Piezoelektret sein, wie zum Beispiel aufgeladenes poröses Polypropylen oder Teflon beziehungsweise Fluorethylenpropylen (FEP). Insbesondere kann das Wandlerelement ein piezoelektrisches Element sein und die Umfeldsensiereinrichtung als eine piezoelektrische Umfeldsensiereinrichtung oder als Umfeldsensiereinrichtung auf Piezobasis verstanden werden. Die Elektroden des Wandlerelements - hier nicht näher ausgeführt - sind beispielsweise über Drähte oder Litzen mit einer entsprechenden Elektronik verbunden.

Die sogenannte Membran der Umfeldsensiereinrichtung ist beispielsweise durch eine Außenhaut eines Stoßfängers, eines Seitenspiegels, einer Zierleiste, eines Scheinwerfers, eines Rücklichts oder eines Türbereichs eines Kraftfahrzeugs gebildet, wobei das Wandlerelement oder die Wandlerelemente und der oder die Resonanzkörper versteckt hinter dieser Außenhaut angeordnet sind. Durch die Kopplung mit dem Vorderkörper und die gemeinsame resonante Auslegung wird die Membran angeregt. Bevorzugt wird die Membran aus einer dünnen Materialschicht gebildet, die beispielsweise aus einem für die Außenhaut eines Kraftfahrzeugs üblichen Polymermaterial gefertigt ist. Bevorzugt weist die Membran eine Dicke zwischen 1,5mm und 4mm, besonders bevorzugt weniger als 2,5mm auf. Sofern die Dicke der Außenhaut nicht den vorhergehend beschriebenen, für die akustische Übertragung bevorzugten Dicken entspricht, kann vorgesehen sein, dass der Stoßfänger des Kraftfahrzeugs in dem Bereich, in welchem die Umfeldsensiereinrichtung verbaut werden soll, entsprechend dünner ausgestaltet ist als an anderer Stelle, also an der Stelle der Umfeldsensiereinrichtung eine Dickenverjüngung aufweist. Derartige lokale Verdünnungen oder Verjüngungen können sowohl durch nachträgliche maschinelle Bearbeitung eingearbeitet werden, beispielsweise durch Ausfräsen, oder schon im Herstellungsprozess, beispielsweise beim Spritzgießen.

Die Kopplung des Resonanzkörpers an der Stirnseite mit der Membran kann mittelbar oder unmittelbar erfolgen, in jedem Fall aber so, dass der Vorderkörper fest mit der Membran verbunden ist und dadurch eine akustische Kopplung in ausreichendem Maße ermöglicht wird, also dass akustische Energie im ausreichenden Umfang übertragen werden kann. Die unmittelbare Kopplung kann beispielsweise durch einen Presssitz, einen Klemmsitz, wie etwa durch Einschrauben, oder auch durch eine Klebung, Verschweißung, etc. bewerkstelligt sein. Eine mittelbare Kopplung heißt dabei lediglich, dass eine weitere Materialschicht zusätzlich zwischen dem Resonanzkörper und der Membran vorgesehen ist, beispielsweise eine Flüssigkeit, wie zum Beispiel ein Gel oder ein Öl, ein Klebstoff ein Klebeband oder sonstiges Material. Diese weitere Materialschicht kann insbesondere dazu vorgesehen sein, um die akustische Kopplung zwischen dem Ultraschallwandler und der Membran zu optimieren beziehungsweise die Unebenheiten auszugleichen.

Durch die in den abhängigen Ansprüchen angeführten Merkmale sind vorteilhafte Weiterbildungen und Verbesserungen der im unabhängigen Anspruch angegeben Einrichtung möglich.

Erfindungsgemäß ist der Vorderkörper durch eine Halterung an der Membran befestigt. Die Halterung kann mechanisch elastisch ausgebildet sein, um Schwingungen des Vorderkörpers so wenig wie möglich zu beeinflussen. Die Halterung sorgt weiterhin dafür, dass der gesamte Vorderkörper, der bereits an einer Stirnseite mit der Membran fest verbunden, beispielsweise verklebt, sein kann, an der Membran fixiert ist. Eine derartige Anordnung ist aus dem Grund sinnvoll, da der Vorderkörper gewöhnlicherweise beim normalen Betrieb der Umfeldsensiereinrichtung keinem Defekt erliegt, also prinzipiell über die gesamte Lebensdauer der Umfeldsensiereinrichtung verwendet werden kann. Durch den trennbaren Aufbau des Ultraschallwandlers, also aufgrund dessen modularen Aufbaus wird daher ein Austausch des Wandlerelements und/oder des Rückkörpers sowie optional dazwischen vorgesehener Kopplungselemente oder Kopplungsglieder bei einem Defekt eines dieser Bauteile ermöglicht, wobei der Vorderkörper zusammen mit der Halterung an der Membran verbleiben kann, also ohne die gesamte Umfeldsensiereinrichtung austauschen zu müssen. Dies trägt dem Umstand Rechnung, dass üblicherweise das Wandlerelement das Bauteil des Ultraschallwandlers ist, das während des herkömmlichen Gebrauchs der Umfeldsensiereinrichtung einem Defekt erliegen kann.

In einer möglichen Ausführung kann die Halterung einstückig mit dem Vorderkörper ausgebildet sein, beispielsweise durch Vorsprünge, die von dem Vorderkörper wegstehen und dazu geeignet sind, den Vorderkörper mit der Membran zu fixieren. Alternativ dazu kann die Halterung ein separates Bauteil sein, wobei der Vorderkörper fest mit der Halterung verbunden ist, vorzugsweise indem der Vorderkörper in die Halterung, also in eine Aussparung in der Halterung eingeklebt, oder eingepresst ist. Weitere Methoden zur festen Verbindung der Halterung mit dem Vorderkörper sind ebenso denkbar, wie beispielsweise eine zusätzliche Fixiervorrichtung an der Halterung, zum Beispiel in Form einer Halteklammer oder Haltefeder. Je nach Material wäre ein Verschweißen der Halterung mit dem Vorderkörper ebenso denkbar. Um eine Beeinflussung der Schwingungen des Vorderkörpers so gering wie nur möglich zu halten, ist die Halterung an einem Schwingungsknoten (λ/4) angebracht. Die Halterung kann gegenüber der Membran ferner durch eine Lagerungskomponente elastisch gelagert sein, beispielsweise durch einen elastischen Lagerring oder dergleichen, der zwischen Halterung und Membran beziehungsweise zwischen der Halterung und einem an der Membran vorgesehenen Rahmen angeordnet sein kann.

Da bei Verwendung eines piezokeramischen Wandlerelements die Piezokeramik nur geringe Zugspannungen verträgt, sind in einer weiteren bevorzugten Ausführung der erfindungsgemäßen Umfeldsensiereinrichtung das Wandlerelement und der Rückkörper gegen den Vorderkörper vorgespannt angeordnet. Diese Vorspannung kann dabei so umgesetzt sein, dass zumindest das Wandlerelement und der Rückkörper durch wenigstens ein Spannelement auf Druck gegen den Vorderkörper vorgespannt angeordnet sind. Ein derartiges Spannelement kann eine Schraube oder eine Spannscheibe sein, mit der der Rückkörper und das Wandlerelement gegenüber dem Vorderkörper vorgespannt sind, optional über die Kopplungsglieder, die zwischen diesen Bauteilen angeordnet sein können, um die Schwingungen des Ultraschallwandlers zwischen den Bauteilen optimal zu übertragen und gegebenenfalls Unebenheiten auszugleichen. Alternativ zu einer Verschraubung durch eine Spannschraube oder eine Verspannung durch eine Spannscheibe sind auch andere Verspannungsmethoden denkbar, wie beispielsweise eine Vorspannung mit Hilfe einer Federscheibe oder dergleichen. Eine derartige Gestaltung des Ultraschallwandlers wird besonders im Leistungsultraschall verwendet, da dort hohe mechanische Spannungen auf das piezokeramische Wandlerelement wirken können. Da aber besonders Zugspannungen zu Schädigungen der Piezokeramik führen können, ist die Anordnung auf Druck vorgespannt, so dass der Ultraschallwandler stärker beansprucht werden kann, ohne dass ein Bruch der Piezokeramik verursacht wird.

Die vorhergehend erwähnten Kopplungsglieder können zwischen dem Vorderkörper und dem Wandlerelement und/oder dem Wandlerelement und dem Rückkörper angeordnet sein, wobei derartige Kopplungsglieder vorzugsweise aus einem Kunststoff, wie zum Beispiel einem Epoxid, einem gefüllten Harz oder einem Polyethylenterephthalat (PET), einem Metall, wie zum Beispiel Aluminium oder Messing, einem Gel, oder aus einer Kombination aus diesen bestehen, sowie aus geschäumten Materialien, wie Metallen oder Kunststoffen. Eine derartige Kombination wäre beispielsweise ein Kopplungsglied, das aus einer Kunststoffscheibe oder auch eine Metallscheibe mit daran angebrachtem Gel, Klebeband oder ablösbarem Klebstoff aufgebaut ist.

Für übliche Ultraschallwandleranwendungen werden überwiegend Dickenschwinger eingesetzt, da bei diesen die Schallerzeugung ausreichend leistungsfähig ist. Diese Dickenschwinger bestehen in der Regel aus mehreren Elementen, die häufig aus Metall, Keramik, Piezokeramik oder Kunststoff gefertigt sind. Den genannten Materialien ist gemeinsam, dass sie nicht über eine für die Anwendung ausreichende Materialdämpfung verfügen. Demnach ist es bei der erfindungsgemäßen Umfeldsensiereinrichtung weiter bevorzugt, dass diese ferner einen Dämpfungsmechanismus zum Dämpfen der Schwingung des Resonanzkörpers in dem sonst schwach gedämpften System aufweist. Die ausreichende Dämpfung des mechanischen Resonanzsystems ist erforderlich, um ein für die Umfeldsensierung adäquates Ein- und Ausschwingverhalten zu erreichen, Bauteiltoleranzen auszugleichen und das Zusammenwirken mehrerer Einzelwandler zu gewährleisten. So kann in einer Ausführung der Dämpfungsmechanismus durch ein Gehäuse ausgebildet sein, in dem ein schwingungsdämpfendes Material gelagert ist, vorzugsweise ein Material auf Silikonbasis, das zumindest das Wandlerelement und den Rückkörper soweit umgibt, wie es durch die Kombination aus Halterung und Vorderkörper zugelassen wird. Hier kann unter anderem ein poriger Silikonschaum zum Einsatz kommen. Das Gehäuse kann an der Membran befestigt sein und den Ultraschallwandler vorzugsweise vollständig abdecken. Ferner kann der Rückkörper mit Rippen oder anderen hervorstehenden Geometrien versehen sein, wie zum Beispiel Noppen oder Flügel oder dergleichen, so dass bei einer Schwingung des Ultraschallwandlers und demnach einer Schwingung des Resonanzkörpers das Dämpfungsmaterial gestaucht und die Schwingung des Rückkörpers durch das schwingungsdämpfende Material gedämpft wird. Weiter vorzugsweise sind die mit Rippen oder anderen hervorstehenden Geometrien versehenen Teile des Rückkörpers mit dem schwingungsdämpfenden Material umgossen.

Beispielhaft kann für den Vorderkörper ein Kunststoff- oder Gummimaterial gewählt werden, wobei der Rückkörper unter anderem aus einem Metall, beispielsweise aus Aluminium, Blech, Stahl oder Messing gefertigt sein kann. Die Auswahl geeigneter Materialien kann durch Einschränkungen oder Vorgaben bezüglich der zu erreichenden Empfangsempfindlichkeiten oder Sendesignalstärken der Umfeldsensiereinrichtung festgelegt sein. Insbesondere können aber auch weitere Umgebungseinflüsse, wie beispielsweise die Umgebungstemperatur oder etwa die mechanische Beanspruchung durch Schütteln, berücksichtigt werden, um geeignete Materialien festzulegen. Weiterhin können maximale Einbautiefen die Wahl der Materialien festlegen.

Ein derartig hergestellter Resonanzkörper ist besonders geeignet für alle Fahrzeuge oder bewegte Maschinen, die generell eine Umfeldsensierung einsetzen. Die Erfindung kann insbesondere bei solchen Umfeldsensoren eingesetzt werden, welche beispielsweise im vorderen und/oder hinteren Stoßfänger eines Fahrzeugs zum Zwecke der Parkassistenz und/oder Kollisionsvermeidung vorgesehen sind. Typischerweise werden dabei Ultraschallwandler eingesetzt, welche sowohl Ultraschallwellen emittieren können als auch Ultraschallwellen empfangen können. Es kann aber auch vorgesehen sein, die Ultraschallwandler nur als Empfänger oder nur als Sender einzusetzen. Insbesondere ist dies der Fall bei den fahrzeugtechnikbezogenen Gebieten Antriebselektronik und Betriebselektronik, im Bereich der Robotik, insbesondere für Transportroboter in der Fertigung, in Krankenhäusern, in Pflegeheimen, in Logistikbereichen, etc., sowie bei der Herstellung von Land- und Baumaschinen.

Ferner ist gemäß der Erfindung ein Kraftfahrzeug mit einer Außenhaut und einer vorhergehend beschriebenen Umfeldsensiereinrichtung vorgesehen, wobei die Außenhaut des Kraftfahrzeugs durch eine Außenhaut eines Stoßfängers, eines Seitenspiegels, einer Zierleiste, eines Scheinwerfers, eines Rücklichts eines Türbereichs oder dergleichen ausgebildet ist und wobei der Ultraschallwandler, also das Wandlerelement und der Resonanzkörper, versteckt hinter der Außenhaut angeordnet sind. Prinzipiell kann die erfindungsgemäße Umfeldsensiereinrichtung an jeder Stelle des Kraftfahrzeugs angeordnet sein, an der hinter dessen Außenhaut ausreichend Einbauraum vorhanden ist. Insbesondere kann dabei die Umfeldsensiereinrichtung in einem Ultraschallsystem verbaut sein, welches eine Gruppe von Ultraschallsensiereinrichtungen umfasst, wobei zumindest eine, bevorzugt alle Ultraschallsensiereinrichtungen die vorhergehend beschriebenen Merkmale der Umfeldsensiereinrichtung umfassen. Das Ultraschallsystem kann beispielsweise dazu eingerichtet sein, eine Teilumgebung des Kraftfahrzeugs zu erfassen. Beispielsweise können die Ultraschallsensiereinrichtungen im Frontbereich zur Erfassung einer vorderseitigen Fahrzeugumgebung und/oder die Ultraschallsensiereinrichtungen im Seitenbereich zur Erfassung eines Seitenbereichs des Fahrzeugs und/oder die Ultraschallsensiereinrichtungen im Heckbereich zur Erfassung einer rückwärtigen Umgebung des Fahrzeugs jeweils einem derartigen Ultraschallsystem zugeordnet sein. Typischerweise werden hierbei vier bis sechs Ultraschallsensiereinrichtungen in einem Stoßfänger verbaut, wobei nur maximal vier Ultraschallsensiereinrichtungen mit ungefähr derselben Blickrichtung montiert sind. Um insbesondere auch den Bereich neben dem Fahrzeug zu erfassen, werden im vorderen Stoßfänger außerdem Ultraschallsensiereinrichtungen so positioniert, dass sie nach links und nach rechts ihren Erfassungsbereich haben. Zusätzlich oder alternativ können auch im hinteren Stoßfänger Ultraschallsensiereinrichtungen derart positioniert sein, dass diese einen Bereich links und rechts neben dem Kraftfahrzeug erfassen. Das Ultraschallsystem weist darüber hinaus auch eine der jeweiligen Gruppe zugeordnete Steuereinrichtung und eine Signalverarbeitungseinrichtung auf. Um den Seitenbereich des Fahrzeugs zu erfassen, können sowohl seitlich im vorderen und hinteren Stoßfänger verbaute Ultraschallsensiereinrichtungen verwendet werden, als auch solche Ultraschallsensiereinrichtungen, die in einem Seitenspiegel oder in einem Türabschnitt verbaut sind.

### Vorteile der Erfindung

Bei Kraftfahrzeugumfeldsensiervorrichtungen nach dem Stand der Technik sind soweit hauptsächlich Ultraschallwandleraufbauten bekannt, bei denen der Ultraschallwandler vollständig mit einem Stoßfänger oder dergleichen fest verklebt ist. Ein Auswechseln eines derartigen Ultraschallwandlers bei einem auftretenden Defekt, beispielsweise einem Defekt des piezokeramischen Wandlerelements, ist daher ohne übermäßigen Aufwand, wie zum Beispiel ein restefreies Reinigen der Klebestellen, nicht möglich.

Mit der vorliegenden Erfindung wird es möglich, bei einem derartigen Defekt des Ultraschallwandlers nur die defekten Bauteile auszutauschen, ohne es erforderlich zu machen, den Stoßfänger von dem gesamten Ultraschallwandler zu befreien und einen neuen Ultraschallwandler anstelle des defekten anbringen zu müssen. Die auszutauschenden Teile des Ultraschallwandlers können als Ersatzteil, beispielweise in einer Kombination aus Wandlerelement, Rückkörper und Gehäuse, angeboten werden, die nach Demontage der defekten Umfeldsensiereinrichtung einfach ausgetauscht und gegen den noch vorhandenen Vorderkörper mit Halterung einfach vorgespannt werden können. Auf diese Weise wird ein problemloser und kostengünstiger Austausch der defekten Teile der Umfeldsensiereinrichtung möglich.

### Kurze Beschreibung der Zeichnungen

Ausführungsformen der Erfindung sind in den Zeichnungen dargestellt und in der nachfolgenden Beschreibung näher erläutert. Es zeigen
- Fig. 1: einen Längsschnitt eines prinzipiellen Aufbaus einer ersten bevorzugten Ausführungsform der erfindungsgemäßen Umfeldsensiereinrichtung;
- Fig. 2: einen Längsschnitt eines prinzipiellen Aufbaus einer zweiten bevorzugten Ausführungsform der erfindungsgemäßen Umfeldsensiereinrichtung; und
- Fig. 3: einen Längsschnitt eines prinzipiellen Aufbaus eines Ultraschallwandlers gemäß dem Stand der Technik.

### Bevorzugte Ausführungsformen der Erfindung

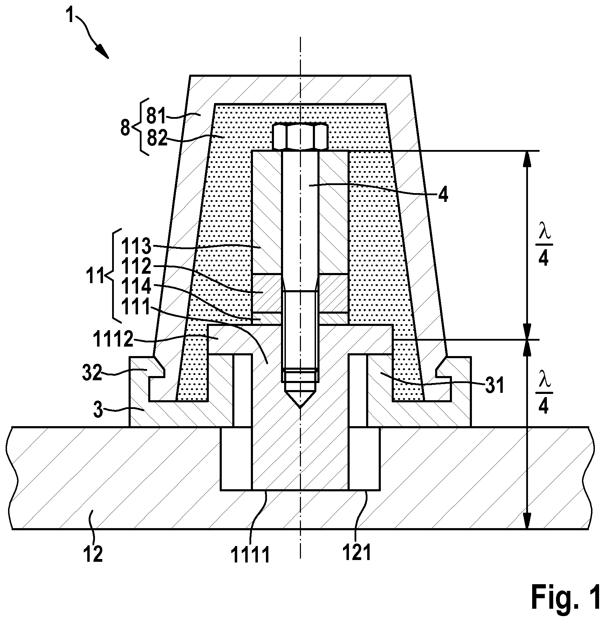

Fig. 1 zeigt eine Umfeldsensiereinrichtung 1 gemäß einer ersten bevorzugten Ausführungsform der Erfindung in seitlicher Querschnittsansicht. Die Umfeldsensiereinrichtung 1 umfasst einen Ultraschallwandler 11 und eine Membran 12, wobei der Ultraschallwandler 11 prinzipiell aus einer Verbindung aus einem Vorderkörper 111, einem piezoelektrischen Wandlerelement 112 und einem Rückkörper 113, in dieser Reihenfolge, aufgebaut ist. Zwischen dem Wandlerelement 112 und dem Vorderkörper 111 ist ein Kopplungsglied 114 in Form einer Kunststoffscheibe angeordnet. Das Wandlerelement 112, der Rückkörper 113 sowie das Kopplungsglied 114 sind bei dieser Ausführungsform ringförmige Elemente mit einem kreisförmigen Außendurchmesser und einer kreisförmigen Aussparung in der Mitte. Eine Kontaktierung des piezoelektrischen Wandlerelements 112 erfolgt hierbei durch Anbringen eines ersten Pols auf einer ersten Seitenfläche des Wandlerelements 112 und durch Anbringung eines zweiten Pols auf der der ersten Seitenfläche gegenüberliegenden Seitenfläche, wobei die beiden Pole durch eine Lötverbindung oder dergleichen mit dem Wandlerelement 112 verbunden sind. Die beiden Pole sind mit einer entsprechenden Elektronik der Umfeldsensiereinrichtung 1 verbunden. Die Kontaktierungen, die für eine Funktion des piezoelektrischen Wandlerelements 112 an jeder Seite des Wandlerelements 112 nötig sind, sind in Figur 1 aus Gründen der vereinfachten Darstellung nicht gezeigt.

Das Wandlerelement 112, der Rückkörper 113 sowie das Kopplungsglied 114 sind in dieser Reihenfolge durch eine Spannschraube 4, die sich durch die jeweilige mittige Aussparung erstreckt, gegen den Vorderkörper 111 vorgespannt und dadurch an diesem auf modulare Bauweise befestigt. Der Vorderkörper 111 hat eine Halterung 1112 in Form eines scheibenartigen Vorsprungs, der sich von seinem dem Kopplungsglied 114 zugewandten Ende nach außen hin erstreckt. Die Halterung 1112 ist an einer Befestigungsscheibe 3 durch Verkleben, Verschweißen oder dergleichen fixiert, wobei die Befestigungsscheibe 3 im Querschnitt eine U-Form aufweist und die Halterung 1112 an einem Ende 31 der U-Form befestigt ist. Alternativ dazu kann die Befestigungsscheibe 3 im Querschnitt auch eine S-Form aufweisen, wobei die Halterung 1112 dann an einem Ende der S-Form befestigt ist. An dem anderem Ende 32 der U-Form ist ein Vorsprung beziehungsweise eine Rastnase vorgesehen, an dem ein Gehäuse 81 eines Dämpfungsmechanismus 8 eingerastet ist, wobei die Rastnase mit einer Nut an der Außenseite des Gehäuses 81 in Eingriff geht. Das Gehäuse 81 ist mit einem schwingungsdämpfenden Silikonschaum 82 gefüllt, der das Wandlerelement 112, den Rückkörper 113, das Kopplungsglied 114, das freiliegende Ende der Spannschraube 4, die Halterung 1112 des Vorderkörpers 111 sowie das Ende 31 der Befestigungsscheibe 3 umgibt. Der Silikonschaum 82 kann bereits im Vorfeld im Sinne einer Negativform in das Gehäuse 81 eingebracht worden sein, kann aber auch erst nach Einrasten des Gehäuses 81 nachträglich in das Gehäuse 81 eingespritzt worden sein, so dass die genannten Bauteile vollständig umspritzt sind. Zu dem letztgenannten Zweck kann das Gehäuse 81 eine Einfüllöffnung (nicht gezeigt) zum Einspritzen des Silikonschaums 82 aufweisen.

Der Vorderkörper 111 ist mit einer der Membran 12 zugewandten Stirnseite 1111, auch Stirnabschnitt 1111 oder Stirnbereich 1111 genannt, mit der Membran 12 gekoppelt. Das bedeutet, dass in der dargestellten Ausführungsform die Stirnseite 1111 eine Kontaktfläche zur Membran 12 bildet. Die Kopplung zwischen dem Vorderkörper 111 und der Membran 12 erfolgt unmittelbar durch Klebung, Verschweißung, etc. zwischen der Stirnseite 1111 und der Membran 12. Zwischen der Stirnseite 1111 und der Membran 12 kann alternativ dazu eine mechanische Kopplung vorliegen, beispielsweise durch eine Verschraubung oder eine Verklemmung des Vorderkörpers 111 in der Membran 12. Die Membran 12 ist bei dieser Ausführungsform in einem Kontaktbereich zwischen Stirnseite 1111 und Membran 12 dünner ausgebildet als außerhalb des Kontaktbereichs, so dass der Vorderkörper 111 im Kontaktbereich in einer Aussparung 121 in der Membran 12 zumindest teilweise versenkt ist. Dies hat den Vorteil, dass die Umfeldsensiereinrichtung 1 einerseits ausreichend empfindlich zur Aufnahme von Ultraschallwellen ausgelegt werden kann beziehungsweise ausreichend starke Ultraschallwellen aussenden kann, und andererseits akustische Wellen, die sich in horizontaler Richtung in der Membran 12 befinden teilweise durch einen Impedanzsprung reflektiert werden und somit weniger stören. Weiterhin kann durch diese Aussparung eine genaue Positionierung des Vorderkörpers 111 bei der Montage und eine reduzierten Bautiefe des Wandlerelements 112 erreicht werden.

Der gesamte Ultraschallwandler 11 ist bei der in Figur 1 dargestellten ersten bevorzugten Ausführungsform rotationssymmetrisch aufgebaut, was bedeutet dass sowohl der Querschnitt des Vorderkörpers 111, der Querschnitt des Wandlerelements 112, der Querschnitt des Rückkörpers 113 als auch der Querschnitt des Kopplungsglieds 114 eine Kreisform ausbilden. In einer bevorzugten Ausführung ist der Durchmesser des Vorderkörpers 111 kleiner als der Durchmesser der übrigen Bauteile. Alternativ dazu kann der Querschnitt eines dieser Bauteile oder aller dieser Bauteile auch eine Ellipsenform, eine Rechteckform, insbesondere eine Quadratform oder die Form eines Rechtecks mit abgerundeten Ecken, oder eine Kombination aus den vorhergehend genannten geometrischen Formen aufweisen. Entsprechend weist die Halterung 1112 des Vorderkörpers 111 ebenfalls eine Kreisform auf, wodurch die Halterung 1112 bei dieser Ausführungsform die Form einer Scheibe annimmt. In einer bevorzugten Ausführungsform ist die Halterung 1112 nicht umlaufend, sondern nur partiell, also nur an bestimmten Stellen am Außenumfang des Vorderkörpers 111 ausgebildet. Dadurch kann Gewicht und Material des Vorderkörpers 111 gespart sowie eine bessere Entkopplung erzielt, da einer derartige partiell ausgebildete Halterung im Vergleich zu der umlaufenden Halterung 1112 nachgiebiger ist.

Die Aussparung 121 der Membran 12 entspricht der Querschnittsform der Stirnseite 1111 des Vorderkörpers 111. Der Resonanzkörper 111, 113 ist bei der ersten bevorzugten Ausführungsform aus einem Vorderkörper 111 aus einem Metall und/oder Polymer und aus einem Rückkörper 113 aus Metall und/oder Polymer aufgebaut.

Wie es in Figur 1 ferner gezeigt ist, bildet der Ultraschallwandler 11 der erfindungsgemäßenAusführungsform einen λ/2-Schwinger aus, bei dem der Vorderkörper 111 zusammen mit der Membran 12 in Resonanz mit einer Wellenlänge von λ/4 schwingt, und bei dem der restliche Aufbau, also die Kombination aus Wandlerelement 112, Rückkörper 113 und Kopplungsglied 114 ebenfalls in Resonanz mit einer Wellenlänge von λ/4 schwingt. Die Halterung 1112 ist demnach erfindungsgemäß genau in der Mitte des λ/2-Schwingers angeordnet, also bei λ/4, um sicherzustellen, dass die Halterung 1112 in einem Knotenpunkt der Schwingung liegt, da in Knotenpunkten die Schwingung verschwindet und somit die Halterung 1112 die Schwingung nicht beeinflusst.

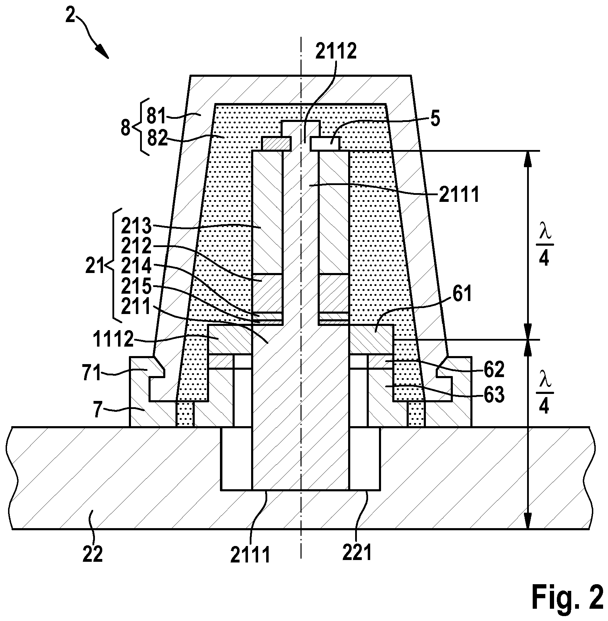

Figur 2 zeigt eine Umfeldsensiereinrichtung 2 gemäß einer zweiten bevorzugten Ausführungsform der Erfindung in seitlicher Querschnittsansicht. Die Umfeldsensiereinrichtung 2 umfasst einen Ultraschallwandler 21 und eine Membran 22, wobei der Ultraschallwandler 21 prinzipiell aus einer Verbindung aus einem Vorderkörper 211, einem piezoelektrischen Wandlerelement 212 und einem Rückkörper 213, in dieser Reihenfolge, aufgebaut ist. Zwischen dem Wandlerelement 212 und dem Vorderkörper 211 ist ein Kopplungsglied 214 in Form einer Kunststoffscheibe sowie, als Teil des Kopplungsglieds 214, eine optional darauf aufgebrachte Kopplungsschicht 215 aus Gel, einem Klebeband oder einem leicht lösbarem Kleber angeordnet. Das Wandlerelement 212, der Rückkörper 213 sowie das Kopplungsglied 214 sind bei dieser Ausführungsform ebenfalls ringförmige Elemente mit einem kreisförmigen Außendurchmesser und einer kreisförmigen Aussparung in der Mitte. Eine Kontaktierung des piezoelektrischen Wandlerelements 212 erfolgt hierbei durch Anbringen eines ersten Pols auf einer ersten Seitenfläche des Wandlerelements 212 und durch Anbringung eines zweiten Pols auf der der ersten Seitenfläche gegenüberliegenden Seitenfläche, wobei die beiden Pole durch eine Lötverbindung oder dergleichen mit dem Wandlerelement 212 verbunden sind. Die beiden Pole sind mit einer entsprechenden Elektronik der Umfeldsensiereinrichtung 2 verbunden. Die Kontaktierungen, die für eine Funktion des piezoelektrischen Wandlerelements 212 an jeder Seite des Wandlerelements 212 nötig sind, sind in Figur 2 aus Gründen der vereinfachten Darstellung nicht gezeigt.

Das Wandlerelement 212, der Rückkörper 213 sowie das Kopplungsglied 214 sind in dieser Reihenfolge auf einen stabförmigen Forstsatz 2111 des Vorderkörpers 211 aufgesteckt, der sich durch die jeweilige mittige Aussparung erstreckt. An dem freiliegenden Ende des Fortsatzes 2111 ist eine Nut 2112 vorgesehen, in der ein Spannring 5 angeordnet ist, mit dem das Wandlerelement 212, der Rückkörper 213 sowie das Kopplungsglied 214 gegen den Vorderkörper 111 vorgespannt und dadurch an diesem auf modulare Bauweise befestigt sind. Der Vorderkörper 111 ist an dem Absatz vor dem Fortsatz 2111 in eine separate Halterung 61 in Form einer ringförmigen Scheibe gepresst. Die Halterung 61 ist über eine ringförmige, elastische Lagerscheibe 62 an einer Befestigungsbuchse 63 durch Verkleben fixiert, wobei die Befestigungsbuchse 63 im Querschnitt eine L-Form aufweist und die Halterung 61 an dem langen Ende der L-Form befestigt ist. Die Befestigungsbuchse 63 umgebend ist eine Rastbuchse 7 mit einer Rastnase 71 vorgesehen, an der ein Gehäuse 81 eines Dämpfungsmechanismus 8 eingerastet ist, wozu die Rastnase 71 mit einer Nut an der Außenseite des Gehäuses 81 in Eingriff geht. Das Gehäuse 81 ist beispielsweise mit einem schwingungsdämpfenden Silikonschaum 82 gefüllt, der, von oben ausgehend, das freiliegende Ende des Vorderkörpers 211, den Spannring 5, das Wandlerelement 212, den Rückkörper 213, das Kopplungsglied 214, die Kopplungsschicht 215, die Halterung 61, die Lagerscheibe 62 sowie die Befestigungsbuchse 63 umgibt. Der Silikonschaum 82 kann bereits im Vorfeld im Sinne einer Negativform in das Gehäuse 81 eingebracht worden sein, kann aber auch erst nach Einrasten des Gehäuses 81 nachträglich in das Gehäuse 81 eingespritzt worden sein, so dass die genannten Bauteile umspritzt sind. Zu dem letztgenannten Zweck kann das Gehäuse 81 eine Einfüllöffnung (nicht gezeigt) zum Einspritzen des Silikonschaums 82 aufweisen.

Der Vorderkörper 211 ist mit einer der Membran 22 zugewandten Stirnseite 2111, auch Stirnabschnitt 2111 oder Stirnbereich 2111 genannt, mit der Membran 22 gekoppelt. Das bedeutet, dass in der dargestellten Ausführungsform die Stirnseite 2111 eine Kontaktfläche zur Membran 22 bildet. Die Kopplung zwischen dem Vorderkörper 211 und der Membran 22 erfolgt unmittelbar durch Klebung, Verschweißung, oder dergleichen zwischen der Stirnseite 2111 und der Membran 22. Zwischen der Stirnseite 2111 und der Membran 22 kann alternativ dazu eine mechanische Kopplung vorliegen, beispielsweise durch eine Verschraubung oder eine Verklemmung des Vorderkörpers 211 in der Membran 22. Die Membran 22 ist bei der zweiten bevorzugten Ausführungsform ähnlich wie bei der ersten bevorzugten Ausführungsform in einem Kontaktbereich zwischen Stirnseite 2111 und Membran 22 dünner ausgebildet als außerhalb des Kontaktbereichs, so dass der Vorderkörper 211 im Kontaktbereich in einer Aussparung 221 in der Membran 22 zumindest teilweise versenkt ist. Dies hat den Vorteil, dass die Umfeldsensiereinrichtung 2 einerseits ausreichend empfindlich zur Aufnahme von Ultraschallwellen ausgelegt werden kann beziehungsweise ausreichend starke Ultraschallwellen aussenden kann, und andererseits die Membran 22 außerhalb des Kontaktbereichs ausreichend dick gestaltet werden kann.

Der gesamte Ultraschallwandler 21 ist bei dieser zweiten bevorzugten Ausführungsform rotationssymmetrisch aufgebaut, was bedeutet dass sowohl der Querschnitt des Vorderkörpers 211, der Querschnitt des Wandlerelements 212, der Querschnitt des Rückkörpers 213 als auch der Querschnitt des Kopplungsglieds 214 eine Kreisform ausbilden. Alternativ dazu kann der Querschnitt eines dieser Bauteile oder aller dieser Bauteile auch eine Ellipsenform, eine Rechteckform, insbesondere einer Quadratform oder der Form eines Rechtecks mit abgerundeten Ecken, oder eine Kombination aus den vorhergehend genannten geometrischen Formen aufweisen. Entsprechend weist die Halterung 61 ebenfalls eine Kreisform auf, wodurch die Halterung 61 bei dieser Ausführungsform die Form einer Scheibe annimmt. Die Aussparung 221 der Membran 22 entspricht der Querschnittsform der Stirnseite 2111 des Vorderkörpers 211. Der Resonanzkörper 211, 213 ist bei der zweiten bevorzugten Ausführungsform aus einem Vorderkörper 211 und aus einem Rückkörper 213 aus einem glasfasergefülltes Epoxidharz als Material aufgebaut.

Ähnlich zu der in Figur 1 gezeigten ersten bevorzugten Ausführungsform, bildet der Ultraschallwandler 21 der zweiten bevorzugten Ausführungsform einen λ/2-Schwinger aus, bei dem der Vorderkörper 211 zusammen mit der Membran 22 in Resonanz mit einer Wellenlänge von λ/4 schwingt, und bei dem der restliche Aufbau, also die Kombination aus Wandlerelement 212, Rückkörper 213 und Kopplungsglied 214 ebenfalls in Resonanz mit einer Wellenlänge von λ/4 schwingt. Die Halterung 1112 ist demnach genau in der Mitte des λ/2-Schwingers angeordnet, also bei λ/4, um sicherzustellen, dass die Halterung 2112 in einem Knotenpunkt der Schwingung liegt, da in Knotenpunkten die Schwingung verschwindet und somit die Halterung 2112 die Schwingung nicht beeinflusst.

Die Erfindung ist nicht auf die hier beschriebenen Ausführungsformen und die darin hervorgehobenen Aspekte beschränkt. Es sollte angemerkt und verstanden werden, dass es Verbesserungen und Modifikationen geben kann, die an der oben ausführlich beschriebenen vorliegenden Erfindung vorgenommen werden können, ohne vom Umfang der Erfindung abzuweichen, wie er in den beigefügten Ansprüchen dargelegt ist.

## Patentansprüche

1. Umfeldsensiereinrichtung (1; 2) zum Senden und/oder Empfangen von Ultraschallsignalen, mit
einem Ultraschallwandler (11; 21), der zumindest ein Wandlerelement (112; 212) und zumindest einen Resonanzkörper (111, 113; 211, 213) mit einem Vorderkörper (111; 211) und einem Rückkörper (113; 213) aufweist, und
einer Membran (12; 22) zur Schallübertragung, die mit einer Stirnseite (1111; 2111) des Vorderkörpers (111; 211) gekoppelt ist, wobei
der Vorderkörper (111; 211), das Wandlerelement (112; 212) und der Rückkörper (113; 213) trennbar miteinander verbunden sind, und
der Vorderkörper (111; 211) an der Membran (12; 22) befestigt ist, **dadurch gekennzeichnet, dass** der Vorderkörper (111; 211) durch eine Halterung (1112; 61) an der Membran (12; 22) befestigt ist, wobei der Ultraschallwandler (11; 21) zusammen mit dem Rückkörper (113; 213), dem Vorderkörper (111; 211) und der Membran (12; 22) einen λ/2-Schwinger bildet und die Halterung (1112; 61) in der Mitte des λ/2-Schwingers bei λ/4 angeordnet ist.

2. Umfeldsensiereinrichtung (1) nach Anspruch 1, wobei die Halterung (1112) einstückig mit dem Vorderkörper (111) ausgebildet ist.

3. Umfeldsensiereinrichtung (2) nach Anspruch 1, wobei der Vorderkörper (211) fest mit der Halterung (61) verbunden ist.

4. Umfeldsensiereinrichtung (2) nach Anspruch 2 oder 3, wobei die Halterung (61) gegenüber der Membran (22) durch eine Lagerungskomponente (62) elastisch gelagert ist.

5. Umfeldsensiereinrichtung (1; 2) nach einem der vorangehenden Ansprüche, wobei das Wandlerelement (112; 212) und der Rückkörper (113; 213) gegen den Vorderkörper (111; 211) vorgespannt angeordnet sind.

6. Umfeldsensiereinrichtung (1; 2) nach Anspruch 5, wobei zumindest das Wandlerelement (112; 212) und der Rückkörper (113; 213) durch wenigstens ein Spannelement (4; 5) auf Druck gegen den Vorderkörper (111; 211) vorgespannt angeordnet sind.

7. Umfeldsensiereinrichtung (1; 2) nach einem der vorangehenden Ansprüche, wobei die Umfeldsensiereinrichtung (1; 2) ferner einen Dämpfungsmechanismus (8) zum Dämpfen der Schwingung des Resonanzkörpers (111, 113; 211, 213) aufweist.

8. Umfeldsensiereinrichtung (1; 2) nach einem der vorangehenden Ansprüche, wobei zwischen dem Vorderkörper (113; 213) und dem Wandlerelement (112; 212) und/oder dem Wandlerelement (112; 212) und dem Rückkörper (113; 213) ein Kopplungsglied (114; 214, 215) angeordnet ist.

9. Kraftfahrzeug mit einer Außenhaut und zumindest einer Umfeldsensiereinrichtung (1; 2) nach einem der vorangehenden Ansprüche, wobei die Membran (12; 22) der Umfeldsensiereinrichtung (1; 2) durch die Außenhaut (12; 22) Kraftfahrzeugs ausgebildet ist, und wobei der Ultraschallwandler (11; 21) versteckt hinter der Außenhaut (12; 22) angeordnet ist.

## Claims

1. Surroundings sensing system (1; 2) for transmitting and/or receiving ultrasonic signals, having
an ultrasonic transducer (11; 21), which has at least one transducer element (112; 212) and at least one resonant body (111, 113; 211, 213) with a front body (111; 211) and a rear body (113; 213), and
a diaphragm (12; 22) for transmitting sound, which diaphragm (12; 22) is coupled to an end side (1111; 2111) of the front body (111; 211), wherein
the front body (111; 211), the transducer element (112; 212) and the rear body (113; 213) are detachably connected to one another, and
the front body (111; 211) is attached to the diaphragm (12; 22), **characterized in that** the front body (111; 211) is attached to the diaphragm (12; 22) by a securing means (1112; 61), wherein the ultrasonic transducer (11; 21) forms a λ/2 oscillator together with the rear body (113; 213), the front body (111; 211) and the diaphragm (12; 22), and the securing means (1112; 61) is arranged in the centre of the λ/2 oscillator at λ/4.

2. Surroundings sensing device (1) according to claim 1, wherein the securing means (1112) is embodied in one piece with the front body (111).

3. Surroundings sensing device (2) according to Claim 1, wherein the front body (211) is fixedly connected to the securing means (61).

4. Surroundings sensing device (2) according to Claim 2 or 3, wherein the securing means (61) is mounted elastically with respect to the diaphragm (22) by means of a bearing component (62).

5. Surroundings sensing device (1; 2) according to one of the preceding claims, wherein the transducer element (112; 212) and the rear body (113; 213) are arranged prestressed against the front body (111; 211) .

6. Surroundings sensing device (1; 2) according to Claim 5, wherein at least the transducer element (112; 212) and the rear body (113; 213) are arranged prestressed against the front body (111; 211) under pressure by means of at least one clamping element (4; 5).

7. Surroundings sensing device (1; 2) according to one of the preceding claims, wherein the surroundings sensing device (1; 2) also has a damping mechanism (8) for damping the oscillation of the resonant body (111, 113, 211, 213).

8. Surroundings sensing device (1; 2) according to one of the preceding claims, wherein a coupling element (114; 214, 215) is arranged between the front body (113; 213) and the transducer element (112; 212) and/or the transducer element (112; 212) and the rear body (113; 213).

9. Motor vehicle having an outer skin and at least one surroundings sensing device (1; 2) according to one of the preceding claims, wherein the diaphragm (12; 22) of the surroundings sensing device (1; 2) is formed by the outer skin (12; 22) of the motor vehicle, and wherein the ultrasonic transducer (11; 21) is arranged concealed behind the outer skin (12; 22) .

## Revendications

1. Dispositif de détection d'environnement (1 ; 2) permettant d'envoyer et/ou de recevoir des signaux ultrasonores, comprenant
un transducteur ultrasonore (11 ; 21) qui présente au moins un élément transducteur (112 ; 212) et au moins un corps de résonance (111, 113 ; 211, 213) doté d'un corps avant (111 ; 211) et d'un corps arrière (113 ; 213), et
une membrane (12 ; 22) pour la transmission de sons et qui est couplée à une face frontale (1111 ; 2111) du corps avant (111 ; 211), dans lequel
le corps avant (111 ; 211), l'élément transducteur (112 ; 212) et le corps arrière (113 ; 213) sont reliés les uns aux autres de manière séparable, et
le corps avant (111 ; 211) est fixé à la membrane (12 ; 22),
**caractérisé en ce que** le corps avant (111 ; 211) est fixé à la membrane (12 ; 22) par une bride (1112 ; 61), le transducteur ultrasonore (11 ; 21) formant conjointement avec le corps arrière (113 ; 213), le corps avant (111 ; 211) et la membrane (12 ; 22) un oscillateur λ/2, et la bride (1112 ; 61) étant disposée en λ/4 au milieu de l'oscillateur λ/2.

2. Dispositif de détection d'environnement (1) selon la revendication 1, dans lequel la bride (1112) est réalisée d'un seul tenant avec le corps avant (111).

3. Dispositif de détection d'environnement (2) selon la revendication 1, dans lequel le corps avant (211) est relié solidement à la bride (61).

4. Dispositif de détection d'environnement (2) selon la revendication 2 ou 3, dans lequel la bride (61) est montée élastique par rapport à la membrane (22) par l'intermédiaire d'un composant de support (62).

5. Dispositif de détection d'environnement (1 ; 2) selon l'une quelconque des revendications précédentes, dans lequel l'élément transducteur (112 ; 212) et le corps arrière (113 ; 213) sont disposés en précontrainte contre le corps avant (111 ; 211).

6. Dispositif de détection d'environnement (1 ; 2) selon la revendication 5, dans lequel au moins l'élément transducteur (112 ; 212) et le corps arrière (113 ; 213) sont disposés en précontrainte contre le corps avant (111 ; 211) par au moins un élément de serrage (4 ; 5) sous compression.

7. Dispositif de détection d'environnement (1 ; 2) selon l'une quelconque des revendications précédentes, dans lequel le dispositif de détection d'environnement (1 ; 2) présente en outre un mécanisme d'amortissement (8) pour amortir l'oscillation du corps de résonance (111, 113 ; 211, 213).

8. Dispositif de détection d'environnement (1 ; 2) selon l'une quelconque des revendications précédentes, dans lequel un élément de couplage (114 ; 214, 215) est disposé entre le corps avant (113 ; 213) et l'élément transducteur (112 ; 212) et/ou l'élément transducteur (112 ; 212) et le corps arrière (113 ; 213).

9. Véhicule automobile comprenant un revêtement extérieur et au moins un dispositif de détection d'environnement (1 ; 2) selon l'une quelconque des revendications précédentes, dans lequel la membrane (12 ; 22) du dispositif de détection d'environnement (1 ; 2) est réalisée par le revêtement extérieur (12 ; 22) du véhicule automobile, et dans lequel le transducteur ultrasonore (11 ; 21) est disposé de manière masquée derrière le revêtement extérieur (12 ; 22) .
